# EUROPÄISCHE PATENTSCHRIFT

(11) **EP 2 013 582 B1**
(45) Veröffentlichungstag und Bekanntmachung des Hinweises auf die Patenterteilung: **18.11.2009**
(21) Anmeldenummer: 07765260.0
(22) Anmeldetag: 17.04.2007
(51) Int. Cl.: G01C 21/34

(54) **VERFAHREN ZUM ERMITTELN VON MINDESTKOSTEN**
METHOD FOR DETERMINING MINIMUM COSTS
PROCÉDÉ DE DÉTERMINATION DE COÛT MINIMUM

(30) Priorität: 24.04.2006 DE 102006018880
(43) Veröffentlichungstag der Anmeldung: 14.01.2009
(73) Patentinhaber: Continental Automotive GmbH, 30165 Hannover (DE)
(72) Erfinder: PFEIFLE, Martin, 93142 Maxhütte-Haidhof (DE); SASSE, Volker, 93138 Lappersdorf (DE); TANTZ, Uwe, 93152 Nittendorf (DE)
(86) Internationale Anmeldenummer: PCT/EP2007/053722
(87) Internationale Veröffentlichungsnummer: WO 2007/122140

(56) Entgegenhaltungen:
- EP-A1- 0 504 854
- EP-A2- 0 372 840

## Beschreibung

Die Erfindung betrifft ein Verfahren zum Ermitteln von Mindestkosten von einem Startort zu einem Zielort für eine Planung einer Route innerhalb einer Landkarte. Abhängig von dem Startort werden Startknoten ermittelt und abhängig von dem Zielort werden Zielknoten ermittelt.

Aus der US 2002/0059025 A1 ist ein Verfahren bekannt, um in einem Verkehrsnetzwerk einen kürzesten Weg von einem Startort zu einem Zielort zu finden. Dabei werden ein Dijkstra- und ein Floyd-Warshal-Algorithmus verwendet.

Aus der EP 504 854 A1 ist ein Verfahren zum Aussuchen einer Route bekannt. Die Route wird dadurch erhalten, dass eine erste Route von einem Startpunkt zu einem ersten Routenspeicherpunkt gesucht wird, der in einem Zwischenpunktspeicher gespeichert ist. Dann wird eine zweite Route von einem Zielort zu einem zweiten Routenspeicherpunkt gesucht, der in dem Zwischenpunktspeicher gespeichert ist. Zwischen dem ersten Routenspeicherpunkt und dem zweiten Routenspeicherpunkt wird eine dritte Route ermittelt. Dann werden die erste, die zweite und die dritte Route zu einer Gesamtroute verbunden.

Aus der EP 372 840 A2 ist ein adaptives Routenführungssystem für ein Fahrzeug bekannt. Das Navigationssystem umfasst eine Kartenspeichereinheit, eine Positionsbestimmungseinheit und eine Routenberechnungseinheit. In der Kartenspeichereinheit sind Gebäude und Straßendaten abgespeichert, die Knoten und Verbindungen umfassen. Die Routenberechnungseinheit liest die Straßendaten, die die aktuelle Position und die einen Zielort umfassen.

Die Aufgabe der Erfindung ist es, ein Verfahren und eine Vorrichtung zu schaffen, das beziehungsweise die eine effektive Routenplanung ermöglicht.

Die Aufgabe wird gelöst durch die Merkmale der unabhängigen Ansprüche. Vorteilhafte Ausgestaltungen der Erfindung sind in den abhängigen Ansprüchen angegeben.

Die Erfindung betrifft ein Verfahren zum Ermitteln von Mindestkosten von einem Startort zu einem Zielort. Die Mindestkosten werden ermittelt für eine Planung einer Route innerhalb einer Landkarte. Abhängig von dem Startort werden Startknoten ermittelt. Den Startknoten sind unterschiedliche Kategorien von Startknotenkosten von den Startknoten zu zumindest einer vorgegebenen Landkartenmarkierung zugeordnet. Die Startknoten repräsentieren Übergänge, durch die von einem vorgegebenen Landkartenausschnitt der Landkarte zu einem anderen der vorgegebenen Landkartenausschnitte der Landkarte übergegangen werden kann. Die Landkarte ist in die vorgegebenen Landkartenausschnitte unterteilt. Abhängig von den Startknoten wird zumindest die eine vorgegebene Landkartenmarkierung und die entsprechenden Startknotenkosten der unterschiedlichen Kategorien ermittelt. Abhängig von dem Zielort werden Zielknoten ermittelt. Den Zielknoten sind unterschiedliche Kategorien von Zielknotenkosten von den Zielknoten zu zumindest der vorgegebenen Landkartenmarkierung zugeordnet. Die Zielknoten repräsentieren Übergänge, durch die von einem vorgegebenen Landkartenausschnitt der Landkarte zu einem anderen der vorgegebenen Landkartenausschnitte der Landkarte übergegangen werden kann. Abhängig von dem Zielknoten und zumindest der vorgegebenen Landkartenmarkierung werden die entsprechenden Zielknotenkosten der unterschiedlichen Kategorien ermittelt. Die unterschiedlichen Kategorien der Knotenkosten werden unterschiedlich gewichtet abhängig von einem Benutzerwunsch. Die Mindestkosten werden ermittelt abhängig von den unterschiedlich gewichteten Knotenkosten.

Dies ermöglicht, beispielsweise Geschwindigkeitsbegrenzungen, Mautstellen und/oder dynamische Verkehrsbedingungen, beispielsweise Staus, Baustellen und/oder Berufsverkehr bei dem Planen der Route zu berücksichtigen. Ferner ermöglicht dies, bei dem Planen der Route zu berücksichtigen, ob und inwieweit dem Benutzer eine kürzere Streckenlänge der Route oder eine kürzere Fahrdauer zum Zurücklegen der Route und/oder weitere Kosten wichtig sind. Falls die Landkartenausschnitte jeweils in zusammenhängenden Speicherbereichen eines Speichermediums eines Geräts zum Planen der Route und/oder zum Ermitteln des Mindestabstands abgelegt sind, so ermöglicht das Zuordnen von Kosten lediglich zu den Knoten, die die Übergänge repräsentieren, zum Planen der Route für je einen Startort und je einen Zielort lediglich zwei Landkartenausschnitte laden zu müssen. Dies kann dazu beitragen, insbesondere bei geringem Speicherplatzbedarf, insbesondere bei mobilen Routenplanern, ein ausreichend schnelles Planen der Route zu ermöglichen.

In einer vorteilhaften Ausgestaltung des Verfahrens umfassen die Kategorien räumliche Kosten und/oder zeitliche Kosten. Die räumlichen Kosten repräsentieren räumliche Abstände. Die zeitlichen Kosten repräsentieren durchschnittliche Fahrdauern, die durchschnittlich benötigt werden, um die entsprechenden räumlichen Abstände zurückzulegen. Dies ermöglicht abhängig von dem Benutzerwunsch eine besonders effektive und präzise Ermittlung der Mindestkosten.

In einer weiteren vorteilhaften Ausgestaltung des Verfahrens wird in einem Landkartenausschnitt der Landkarte, der einen ausgezeichneten Startort und/oder Zielort umfasst, zumindest eine Zusatzinformation vorgegeben gegenüber einem der Landkartenausschnitte, der keinen ausgezeichneten Startort und/oder Zielort umfasst. Die Landkarte ist in die vorgegebenen Landkartenausschnitte unterteilt. Dies ermöglicht in den Fällen ein besonders schnelles Planen der Route, in denen der Start- beziehungsweise Zielort dem ausgezeichneten Start- beziehungsweise Zielort entspricht.

In einer weiteren vorteilhaften Ausgestaltung des Verfahrens wird als Zusatzinformation zumindest eine zusätzliche Landkartenmarkierung vorgegeben. Dies kann zu einem besonders schnellen Planen der Route beitragen.

In einer weiteren vorteilhaften Ausgestaltung des Verfahrens wird als Zusatzinformation eine der Landkartenmarkierungen so vorgegeben, dass sie dem ausgezeichneten Startort und/oder Zielort entspricht. Dies kann in den Fällen zu einem besonders schnellen Planen der Route beitragen, in denen der Start- beziehungsweise Zielort dem ausgezeichneten Start- beziehungsweise Zielort entspricht.

In einer weiteren vorteilhaften Ausgestaltung des Verfahrens werden abhängig von den Startknoten zu dem Startknoten nächstliegende Startlandkartenmarkierungen ermittelt. Den Startknoten sind lediglich Startknotenkosten der unterschiedlichen Kategorien zu einer vorgegebenen ersten Anzahl an Startlandkartenmarkierungen zugeordnet. Die vorgegebene erste Anzahl ist kleiner als die Gesamtzahl der Landkartenmarkierungen. Abhängig von dem Zielknoten werden zu dem Zielknoten nächstliegende Ziellandkartenmarkierungen ermittelt. Dem Zielknoten sind lediglich Zielknotenkosten der unterschiedlichen Kategorien zu einer vorgegebenen zweiten Anzahl an Ziellandkartenmarkierungen zugeordnet. Die vorgegebene zweite Anzahl an Ziellandkartenmarkierungen ist kleiner als die Gesamtzahl der Landkartenmarkierungen. Die Startknotenkosten und die Zielknotenkosten der unterschiedlichen Kategorien werden ermittelt abhängig von den Startknoten und den Startlandkartenmarkierungen beziehungsweise abhängig von den Zielknoten und von den Ziellandkartenmarkierungen. Die unterschiedlichen Kategorien von Landkartenmarkierungskosten von den Startlandkartenmarkierungen zu den Ziellandkartenmarkierungen werden anhand einer Tabelle ermittelt. Die Tabelle umfasst die Landkartenmarkierungskosten der unterschiedlichen Kategorien aller Landkartenmarkierungen zueinander. Die unterschiedlichen Kategorien aller ermittelten Kosten werden unterschiedlich gewichtet abhängig von dem Benutzerwunsch. Die Mindestkosten werden ermittelt abhängig von den unterschiedlich gewichteten Zielknotenkosten, Startknotenkosten und abhängig von den ermittelten unterschiedlich gewichteten Landkartenmarkierungskosten. Dies ermöglicht, die zu speichernde Datenmenge so weit zu reduzieren, dass die Route, insbesondere die Mindestkosten ausschließlich mit einem mobilen Gerät zum Planen der Route ermittelt werden können.

Die vorteilhaften Ausgestaltungen des Verfahrens können ohne weiteres auf vorteilhafte Ausgestaltungen der Vorrichtung übertragen werden.

Die Erfindung ist im Folgenden anhand von schematischen Zeichnungen näher erläutert. Es zeigen:
- Figur 1: eine erste Ansicht einer Landkarte,
- Figur 2: eine zweite Ansicht der Landkarte,
- Figur 3: eine Tabelle mit Landkartenmarkierungskosten,
- Figur 4: eine dritte Ansicht der Landkarte,
- Figur 5: ein Programm zum Ermitteln und Gewichten von Mindestkosten.

Elemente gleicher Konstruktion oder Funktion sind figurenübergreifend mit den gleichen Bezugszeichen gekennzeichnet.

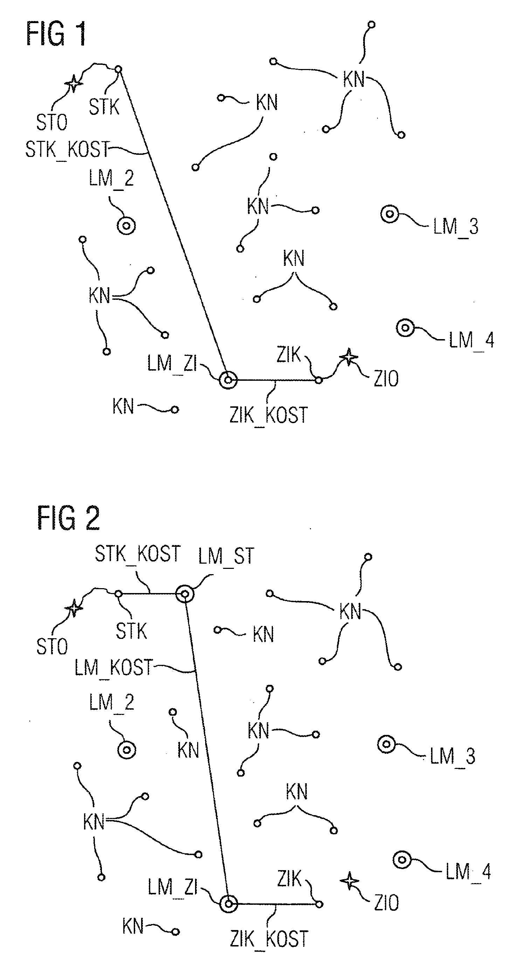

Eine Landkarte MAP (Figur 1) umfasst Knoten KN, Landkartenmarkierungen und mindestens einen Startort STO und mindestens einen Zielort ZIO. Die Landkartenmarkierungen umfassen mindestens erste bis vierte Landkartenmarkierungen LM 1- LM 4. Die Knoten KN umfassen mindestens einen Startknoten STK und einen Zielknoten ZIK. Vorzugsweise ist jeder der Knoten KN repräsentativ für eine Straßenkreuzung.

Den Knoten KN sind Knotenkosten bis zu den Landkartenmarkierungen zugeordnet. Zugeordnet kann in diesen Zusammenhang beispielsweise bedeuten, dass auf einem Speichermedium, auf dem die Landkarte MAP gespeichert ist, jeweils einer der Knoten KN und die entsprechenden Knotenkosten in einem zusammenhängenden Speicherbereich des Speichermediums abgespeichert sind. Dies ist besonders vorteilhaft, da bei einem Laden des Knotens KN zum Ermitteln einer Route und/oder von Mindestkosten MIN_KOST, die für die Route benötigt werden, dann automatisch auch die entsprechenden Knotenkosten geladen werden. Somit wird zum Ermitteln der Knotenkosten keine zusätzliche Zeit benötigt.

Die Knoten KN umfassen zumindest einen, bevorzugt mehrere Startknoten STK und einen, bevorzugt mehrere Zielknoten ZIK. Die Startknoten STK repräsentieren die zu dem Startort STO nächstliegenden Knoten KN. Die Startknoten STK weisen Startknotenkosten STK_KOST zumindest zu den ersten bis vierten Landkartenmarkierungen LM_1 -LM_4 auf. Die Zielknoten ZIK repräsentieren die nächstliegenden Knoten KN zu dem Zielort ZIO. Die Zielknoten ZIK weisen Zielknotenkosten ZIK_KOST zumindest zu den ersten bis vierten Landkartenmarkierungen LM_1 bis LM_4 auf.

Die Kosten umfassen die Knotenkosten und die Mindestkosten MIN_KOST. Die Knotenkosten umfassen die Startknotenkosten STK_KOST, die Zielknotenkosten ZI_KOST und weitere Knotenkosten von einem anderen der Knoten KN zu den ersten bis vierten Landkartenmarkierungen LM_1- LM_4. Die Kosten sind beispielsweise repräsentativ für räumliche Abstände zwischen den Knoten und den Landkartenmarkierungen, für räumliche Abstände zwischen den Landkartenmarkierungen untereinander, für Fahrdauern, die durchschnittlich benötigt werden um die räumlichen Abstände zurückzulegen, für Geschwindigkeitsbegrenzungen und/oder für Mautstellen. Die Mindestkosten MIN_KOST sind repräsentativ für die minimalen Kosten, die benötigt werden, um von dem Startort STO zu dem Zielort ZIO zu gelangen. Das Ermitteln der Mindestkosten MIN_KOST kann einen Suchraum beim Suchen einer Route stark einschränken und somit das Planen der Route stark beschleunigen.

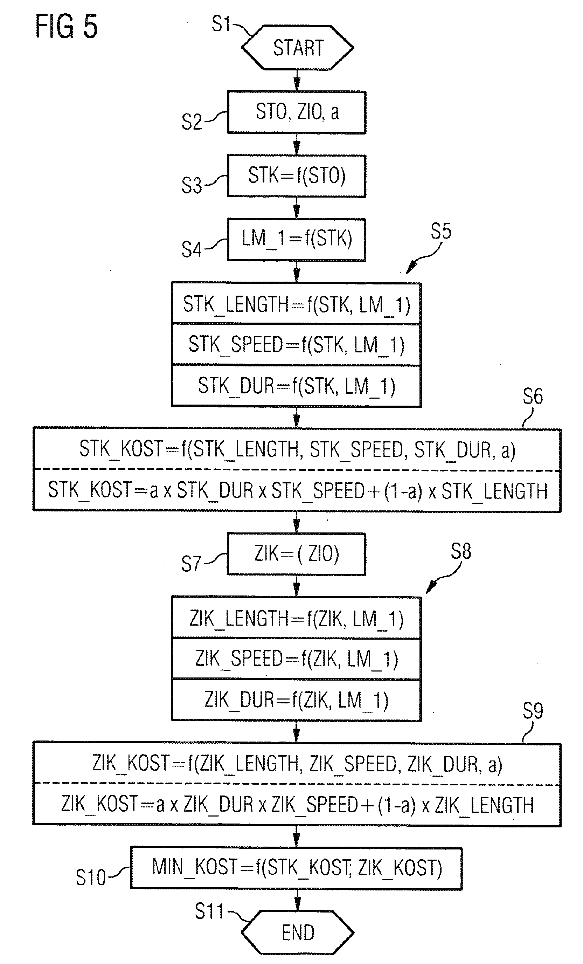

Bei der Routenplanung werden nicht nur entweder die räumlichen, die zeitlichen Kosten oder die weiteren Kosten berücksichtigt, sondern alle gleichzeitig. Dazu ist es besonders vorteilhaft, dass der Benutzer selbst gewichten kann, wie wichtig ihm eine Optimierung der Route beispielsweise bezüglich der Fahrdauer, der zurückzulegenden Streckenlänge und/oder Mautgebühren ist. Beispielsweise können gewichtete Kosten als Funktion der Fahrdauer, einer theoretischen Durchschnittsgeschwindigkeit des Kraftfahrzeugs, der Streckenlänge und eines Gewichtungsfaktors a (Figur 5) ermittelt werden. Der Gewichtungsfaktor a ist vorzugsweise eine prozentuale Größe. Als Daten werden jeweils nur die hundertprozentigen Werte zugeordnet zu den entsprechenden Knoten KN abgespeichert und die individuelle Gewichtung erfolgt abhängig von einem Benutzerwunsch des Benutzers in Echtzeit während dem Ermitteln der Route, insbesondere während dem Ermitteln der Mindestkosten MIN_KOST. Somit können nahezu unendlich viele Kombinationen unterschiedlicher Gewichtungsmöglichkeiten bereitgestellt werden, obwohl lediglich eine stark begrenzte abzuspeichernde Datenmenge dazu verwendet wird.

Vorzugsweise sind den Knoten KN, die Übergänge repräsentieren, lediglich Knotenkosten zu einer vorgegebenen Anzahl an nächstliegenden Landkartenmarkierungen zugeordnet (Figur 2). Insbesondere sind dem Startknoten STK Startknotenkosten STK_KOST zu einer vorgegebenen ersten Anzahl nächstliegender Startlandkartenmarkierungen LM_ST zugeordnet und dem Zielknoten ZIK sind Zielknotenkosten ZIK_KOST zu einer vorgegebenen zweiten Anzahl an Ziellandkartenmarkierungen LM_ZI zugeordnet. Die Startlandkartenmarkierungen LM_ST und die Ziellandkartenmarkierungen LM_ZI repräsentieren die nächstliegenden Landkartenmarkierungen zu den Startknoten STK bzw. zu den Zielknoten ZIK. Die vorgegebene erste und zweite Anzahl an nächstliegenden Landkartenmarkierungen ist vorzugsweise weitaus kleiner als die Gesamtzahl aller Landkartenmarkierungen. Beispielsweise kann die erste und/oder zweite Anzahl der nächstliegenden Landkartenmarkierungen einem bis zehn Prozent aller Landkartenmarkierungen entsprechen. Die erste und/oder zweite Anzahl an nächstliegenden Landkartenmarkierungen kann von Knoten KN zu Knoten KN variieren, sie kann aber auch für alle Knoten KN gleich und/oder fest vorgegeben sein.

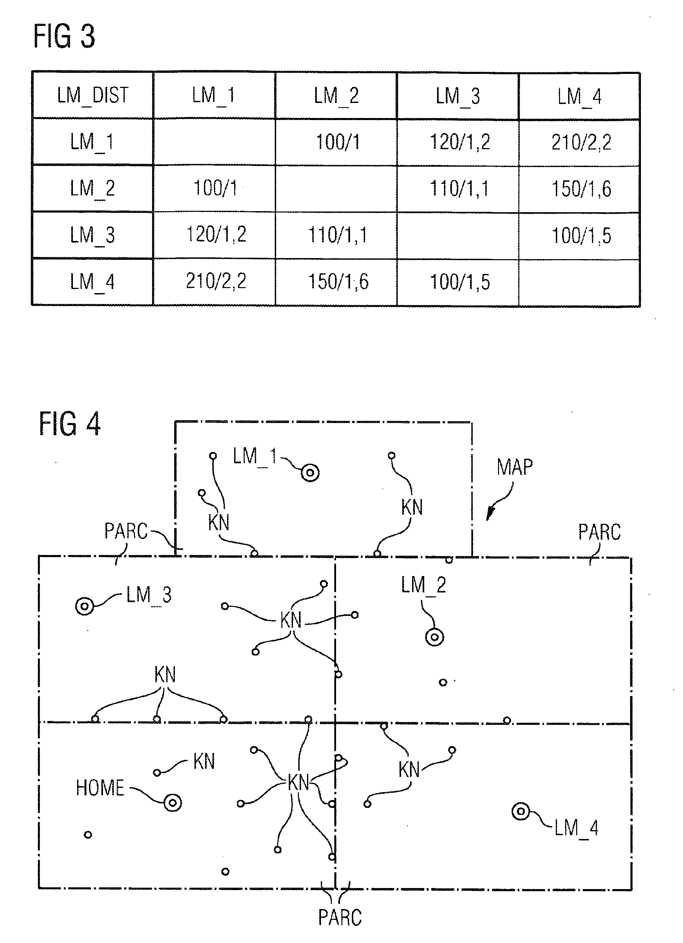

Die Landkartenmarkierungskosten LM_KOST aller Landkartenmarkierungen zueinander sind dann bevorzugt in einer Tabelle hinterlegt (Figur 3). Die Tabelle ist vorzugsweise auf dem Speichermedium gespeichert. Beispielsweise sind die Landkartenmarkierungskosten von der Startlandkartenmarkierung LM_ST bis zu der ersten Landkartenmarkierung LM_1 im Durchschnitt hundert Kilometer und eine Stunde. Das heißt, ein Fahrzeug legt die hundert Kilometer zwischen der Startlandkartenmarkierung LM_ST und der ersten Landkartenmarkierung LM_1 durchschnittlich in einer Stunde zurück. Die Tabelle kann auch unsymmetrisch sein. Das bedeutet in diesem Zusammenhang, dass die Kosten von dem Startort STO zu dem Zielort ZIO, insbesondere die Kosten von der Startlandkartenmarkierung LM_ST zu der Ziellandkartenmarkierung LM_ZI, andere Kosten sein können als von dem Zielort ZIO zu dem Startort STO bzw. von der Ziellandkartenmarkierung LM_ZI zu der Startlandkartenmarkierung LM_ST. Ferner sind bevorzugt alle Kosten abhängig von der Richtung, in der die Route durchfahren wird. Dies kann zum Beispiel durch eine Einbahnstraße hervorgerufen werden.

Bevorzugt wird zumindest ein ausgezeichneter Start- und/oder Zielort vorgegeben (Figur 4). Vorzugsweise entspricht der ausgezeichnete Start- bzw. Zielort einem Start- bzw. Zielort STO, ZIO, den ein Benutzer des Geräts zum Planen der Route häufig auswählt. Dem ausgezeichneten Start- bzw. Zielort wird dann vorzugsweise zumindest eine zusätzliche Landkartenmarkierung, insbesondere eine ausgezeichnete Landkartenmarkierung HOME zugeteilt. Die Landkartenmarkierungskosten LM_KOST der ausgezeichneten Landkartenmarkierung HOME zu den anderen Landkartenmarkierungen werden dann in der Tabelle der Landkartenmarkierungskosten LM_KOST abgespeichert. Bei einer Routenplanung ausgehend von bzw. ankommend an der ausgezeichneten Landkartenmarkierung HOME können dann die Mindestkosten MIN_KOST und/oder die Route sehr schnell berechnet werden, da die ausgezeichnete Landkartenmarkierung HOME repräsentativ ist für den Startknoten STK bzw. für den Zielknoten ZIK. Die Startknotenkosten STK_KOST bzw. die Zielknotenkosten ZIK_KOST können dann automatisch gleich null gesetzt werden. Die ausgezeichnete Landkartenmarkierung HOME kann beispielsweise repräsentativ sein für einen Arbeitsplatz des Benutzers, für einen Wohnort und/oder beispielsweise eine beliebte Freizeitanlage des Benutzers.

Das Versehen des ausgezeichneten Start- und/oder Zielorts STO, ZIO mit der ausgezeichneten Landkartenmarkierung HOME kann als eigenständiger Aspekt der Erfindung gesehen werden. Falls der Startort STO oder der Zielort ZIO der ausgezeichneten Landkartenmarkierung HOME entspricht und falls jedem Knoten KN die Knotenkosten zu allen Landkartenmarkierungen zugeordnet sind, müssen dann zum Ermitteln der Mindestkosten MIN_KOST lediglich die Zielknotenkosten ZIK_KOST bzw. die Startknotenkosten STK_KOST ermittelt werden. Falls der Startort STO oder der Zielort ZIO der ausgezeichneten Landkartenmarkierung HOME entspricht und falls jedem Knoten KN lediglich die Knotenkosten zu den nächstliegenden Landkartenmarkierungen zugeordnet sind, müssen dann zum Ermitteln der Mindestkosten MIN_KOST lediglich die Zielknotenkosten ZIK_KOST bzw. die Startknotenkosten STK_KOST und die Landkartenmarkierungskosten LM_KOST von der Ziellandkartenmarkierung LM_ST zu der ausgezeichneten Landkartenmarkierung HOME anhand der Tabelle der Landkartenmarkierungskosten LM_KOST ermittelt werden.

Die Landkarte MAP ist bevorzugt in Landkartenausschnitte PARC unterteilt. Vorzugsweise ist jeder der Landkartenartenausschnitte PARC als zusammenhängendes Datenpaket, beispielsweise als binary large object (BLOB), in einem zusammenhängenden Speicherbereich des Speichermediums eines Geräts gespeichert. Das Gerät eignet sich zum Ermitteln einer Route und insbesondere zum Ermitteln von Mindestkosten MIN_KOST innerhalb der Landkarte MAP.

Das Ermitteln der Mindestkosten MIN_KOST kann weiterhin beschleunigt werden, indem der Landkartenausschnitt PARC, der den ausgezeichneten Start- bzw. Zielort umfasst, mit Zusatzinformationen ausgestattet wird, die über die Informationen hinausgehen, mit denen die Landkartenausschnitte PARC ausgestattet sind, die keinen ausgezeichneten Start- bzw. Zielort umfassen. Die Zusatzinformationen können beispielsweise zusätzliche Landkartenmarkierungen, wie die ausgezeichnete Landkartenmarkierung HOME, den ausgezeichneten Start- bzw. Zielort selbst, zusätzliche Knoten KN auf dem Rand des entsprechenden Landkartenausschnitts PARC mit entsprechenden Knotenkosten und/oder weitere Zusatzinformationen umfassen.

Die zu speichernde Datenmenge kann beispielsweise reduziert werden, indem lediglich den Knoten KN Knotenkosten zugeordnet werden, die Übergänge von einem der Landkartenausschnitte PARC zu einem anderen der Landkartenausschnitte PARC repräsentieren. Beispielsweise können die Knoten KN, die die Übergänge repräsentieren, auf oder sehr nahe an den Rändern des entsprechenden Landkartenausschnitts PARC liegen. Falls sich die Landkartenausschnitte PARC überlappen, können beispielsweise die Knoten KN die Übergänge repräsentieren, die in dem Überlappungsbereich der Landkartenausschnitte PARC liegen. Zum Ermitteln der Route müssen dann lediglich ein Startlandkartenausschnitt und ein Ziellandkartenausschnitt von den Landkartenausschnitten PARC ermittelt werden, die den Startort STO bzw. den Zielort ZIO umfassen.

Zusammen mit den Daten des Startlandkartenausschnitts werden auch die Daten der Startknoten STK geladen, die auf dem Rand des Startlandkartenausschnitts liegen. Mit den Daten der Startknoten STK werden vorzugsweise auch die Startknotenkosten STK_KOST geladen. Befindet sich in dem Ziellandkartenausschnitt eine der Landkartenmarkierungen so müssen nun lediglich die Kosten von dem Zielort ZIO zu der entsprechenden Landkartenmarkierung ermittelt werden. Befindet sich beispielsweise keine der Landkartenmarkierungen in dem Ziellandkartenausschnitt, so können abhängig von dem Zielort ZIO die Zielknoten ZIK ermittelt werden, die auf dem Rand des Ziellandkartenausschnitts liegen und denen die Knotenkosten zumindest bis zu der entsprechenden Landkartenmarkierung zugeordnet sind. Die Landkartenausschnitte PARC, die die ersten bis vierten Landkartenmarkierungen LM_1- LM 4 umfassen, müssen nicht geladen werden, da die Knotenkosten vorzugsweise den ersten bis vierten Landkartenmarkierungen LM_1 - LM 4 den Start- und Zielknoten STK, ZIK zugeordnet sind.

Ein Programm (Figur 5) zum Ermitteln der Mindestkosten MIN_KOST ist vorzugsweise auf dem Speichermedium des Geräts zum Ermitteln der Route gespeichert. Das Gerät kann beispielsweise ein PC, ein Laptop, ein Pocket-Computer, ein Routenplanungssystem und/oder ein Navigationssystem sein. Das Gerät kann auch als Vorrichtung zum Ermitteln der Mindestkosten von dem Startort STO zu dem Zielort ZIO für die Planung der Route von dem Startort STO zu dem Zielort ZIO innerhalb einer Landkarte MAP bezeichnet werden. Das Programm wird vorzugsweise bei einer Suchanfrage des Benutzers des Geräts nach der Route von dem Startort STO zu dem Zielort ZIO in einem Schritt S1 gestartet. In dem Schritt S1 werden gegebenenfalls Variablen initialisiert.

In einem Schritt S2 werden der Startort STO, der Zielort ZIO und der Gewichtungsfaktor a erfasst, die von dem Benutzer eingegeben und gespeichert wurden. Beispielsweise kann a gleich 20 Prozent dafür repräsentativ sein, dass die Route, insbesondere die Mindestkosten MIN_KOST zu 20 Prozent auf die Fahrdauer und zu 80 Prozent auf die Streckenlänge optimiert werden soll.

In einem Schritt S3 werden abhängig von dem Startort STO die Startknoten STK ermittelt.

In einem Schritt S4 wird abhängig von den Startknoten STK zumindest eine der Landkartenmarkierungen, beispielsweise die erste Landkartenmarkierung LM_1, ermittelt. Alternativ können auch mehre der Landkartenmarkierungen ermittelt werden.

In einem Schritt S5 werden die unterschiedlichen Kategorien von Startknotenkosten STK_KOST ermittelt. Die Startknotenkosten STK_KOST umfassen die Streckenlängen STK_LENGTH von den Startknoten STK zu den Landkartenmarkierungen, die theoretischen Durchschnittsgeschwindigkeiten STK_SPEED, mit denen von dem Startknoten STK zu den Landkartenmarkierungen gefahren werden kann, und/oder die Fahrdauern STK_DUR, die durchschnittlich benötigt werden, um von den Startknoten STK zu den Landkartenmarkierungen zu gelangen. Die theoretische Durchschnittsgeschwindigkeit STK_SPEED spiegelt die durchschnittliche Geschwindigkeit auf verschieden Pfaden von dem Startknoten STK einer der Landkartenmarkierungen wieder. Alternativ können die Kosten noch weitere Kategorien umfassen, beispielsweise finanzielle Kosten, beispielsweise aufgrund von Mautstellen.

In einem Schritt S6 werden die gewichteten Startknotenkosten STK_KOST ermittelt abhängig von den Streckenlängen STK_LENGTH von den Startknoten STK zu den Landkartenmarkierungen, abhängig von den theoretischen Durchschnittsgeschwindigkeiten STK_SPEED, mit denen von dem Startknoten STK zu den Landkartenmarkierungen gefahren werden kann, bzw. abhängig von den Fahrdauern STK_DUR, die durchschnittlich benötigt werden, um von den Startknoten STK zu den Landkartenmarkierungen zu gelangen, und abhängig von dem Gewichtungsfaktor a. Die gewichteten Startknotenkosten STK_KOST werden vorzugsweise anhand der in dem Schritt S6 dargestellten Berechnungsvorschrift ermittelt.

In einem Schritt S7 werden abhängig von dem Zielort ZIO die Zielknoten ZIK ermittelt.

In einem Schritt S8 werden die unterschiedlichen Kategorien von Zielknotenkosten ZIK_KOST ermittelt. Die Zielknotenkosteh ZIK_KOST umfassen die Streckenlängen ZIK_LENGTH von den Zielknoten ZIK zu den Landkartenmarkierungen, die theoretischen Durchschnittsgeschwindigkeiten ZIK_SPEED, mit denen von dem Zielknoten ZIK zu den Landkartenmarkierungen gefahren werden kann, und/oder die Fahrdauern ZIK_DUR, die durchschnittlich benötigt werden, um von den Zielknoten ZIK zu den Landkartenmarkierungen zu gelangen. Alternativ können die Kosten noch weitere Kategorien umfassen, beispielsweise finanzielle Kosten, beispielsweise aufgrund von Mautstellen.

In einem Schritt S9 werden die gewichteten Zielknotenkosten ZIK_KOST ermittelt abhängig von den Streckenlängen ZIK_LENGTH von den Zielknoten ZIK zu den Landkartenmarkierungen, abhängig von den theoretischen Durchschnittsgeschwindigkeiten ZIK_SPEED, mit denen von dem Zielknoten ZIK zu den Landkartenmarkierungen gefahren werden kann, bzw. abhängig von den Fahrdauern ZIK_DUR, die durchschnittlich benötigt werden, um von den Zielknoten ZIK zu den Landkartenmarkierungen zu gelangen, und abhängig von dem Gewichtungsfaktor a. Die gewichteten Zielknotenkosten ZIK_KOST werden vorzugsweise anhand der in dem Schritt S6 dargestellten Berechnungsvorschrift ermittelt.

In einem Schritt S10 werden die gewichteten Mindestkosten MIN_KOST ermittelt abhängig von den gewichteten Startknotenkosten STK_KOST und abhängig von den gewichteten Zielknotenkosten ZIK_KOST. Vorzugsweise werden die Mindestkosten MIN_KOST ermittelt, indem Differenzen gebildet werden, bei denen von den Startknotenkosten STK_KOST die Zielknotenkosten ZIK_KOST abgezogen werden, für alle Tripel von ermittelten Startknoten STK, Zielknoten ZIK und Landkartenmarkierungen, und indem anschließend die größte Differenz ermittelt wird. Die größte Differenz ist repräsentativ für die Mindestkosten MIN_KOST.

In einem Schritt S11 kann das Programm beendet werden. Vorzugsweise wird jedoch das Programm erneut gestartet. Falls sich das Gerät zum Planen der Route während dem Durchfahren der Route bis zu dem erneuten Starten des Programms zu einem anderen Knoten KN bewegt hat als bei dem ersten Starten des Programms, so kann dieser Knoten KN bevorzugt als neuer Startort STO und/oder als neuer Startknoten STK zum Ermitteln von neuen Mindestkosten MIN_KOST herangezogen werden.

Die Erfindung ist nicht auf die angegebenen Ausführungsbeispiele beschränkt. Beispielsweise können die unterschiedlichen Ausführungsbeispiele miteinander kombiniert werden. Beispielsweise kann ein Landkartenausschnitt PARC, der den ausgezeichneten Start- bzw. Zielort umfasst, mit der ausgezeichneten Landkartenmarkierung HOME und/oder weiteren zusätzlichen Landkartenmarkierungen und/oder mit mehr Knoten KN versehen werden, die die Kosten zu den nächstliegenden Landkartenmarkierungen umfassen. Ferner können mehrere Landkartenausschnitte PARC mit den zusätzlichen Informationen versehen werden, insbesondere können mehrere ausgezeichnete Landkartenmarkierungen HOME gesetzt werden.

## Patentansprüche

1. Verfahren zum Ermitteln von Mindestkosten (MIN_KOST) von einem Startort (STO) zu einem Zielort (ZIO) für eine Planung einer Route innerhalb einer Landkarte (MAP), bei dem
- abhängig von dem Startort (STO) Startknoten (STK) ermittelt werden, denen unterschiedliche Kategorien von Startknotenkosten (STK_KOST) von den Startknoten (STK) zu zumindest einer vorgegebenen Landkartenmarkierung zugeordnet sind und die Übergänge repräsentieren, über die von einem vorgegebenen Landkartenausschnitt (PARC) der Landkarte (MAP) zu einem anderen der vorgegebenen Landkartenausschnitte (PARC) der Landkarte (MAP) übergegangen werden kann, wobei die Landkarte (MAP) in die vorgegebenen Landkartenausschnitte (PARC) unterteilt ist,
- abhängig von den Startknoten (STK) zumindest die eine vorgegebene Landkartenmarkierung und die entsprechenden Startknotenkosten (STK_KOST) der unterschiedlichen Kategorien ermittelt werden,
- abhängig von dem Zielort (ZIO) Zielknoten (ZIK) ermittelt werden, denen die unterschiedlichen Kategorien von Zielknotenkosten (ZIK_KOST) von den Zielknoten (ZIK) zu zumindest der vorgegebenen Landkartenmarkierung zugeordnet sind und die Übergänge repräsentieren, über die von einem der vorgegebenen Landkartenausschnitte (PARC) der Landkarte (MAP) zu einem anderen der vorgegebenen Landkartenausschnitte (PARC) der Landkarte (MAP) übergegangen werden kann,
- abhängig von dem Zielknoten (ZIK) und zumindest der vorgegebenen Landkartenmarkierung die entsprechenden Zielknotenkosten (ZIK_KOST) der unterschiedlichen Kategorien ermittelt werden,
- die unterschiedlichen Kategorien der Knotenkosten unterschiedlich gewichtet werden abhängig von einem Benutzerwunsch,
- die Mindestkosten (MIN_KOST) ermittelt werden abhängig von den unterschiedlich gewichteten Knotenkosten.

2. Verfahren nach Anspruch 1, bei dem die Kategorien räumliche Kosten umfassen, die räumliche Abstände repräsentieren, und/oder bei dem die Kategorien zeitliche Kosten umfassen, die durchschnittliche Fahrdauern (DUR) repräsentieren, die durchschnittlich benötigt werden, um die entsprechenden räumlichen Abstände zurückzulegen.

3. Verfahren nach einem der vorstehenden Ansprüche, bei dem in einem Landkartenausschnitt (PARC) der Landkarte (MAP), der einen ausgezeichneten Startort und/oder Zielort umfasst, zumindest eine Zusatzinformation vorgegeben wird gegenüber einem der Landkartenausschnitte (PARC), der keinen ausgezeichneten Startort und/oder Zielort umfasst, wobei die Landkarte (MAP) in die vorgegebenen Landkartenausschnitte (PARC) unterteilt ist.

4. Verfahren nach Anspruch 3, bei dem als Zusatzinformation zumindest eine zusätzliche Landkartenmarkierung vorgegeben wird.

5. Verfahren nach einem der Ansprüche 3 oder 4, bei dem als Zusatzinformation eine der Landkartenmarkierungen so vorgegeben wird, dass sie dem ausgezeichneten Startort und/oder Zielort entspricht.

6. Verfahren nach einem der vorstehenden Ansprüche, bei dem
- abhängig von den Startknoten (STK) zu den Startknoten (STK) nächstliegende Startlandkartenmarkierungen (LM_ST) ermittelt werden, wobei den Startknoten (STK) lediglich Startknotenkosten (STK_KOST) der unterschiedlichen Kategorien zu einer vorgegebenen ersten Anzahl an Startlandkartenmarkierungen (LM_ST) zugeordnet sind, die kleiner ist als die Gesamtzahl der Landkartenmarkierungen,
- abhängig von den Zielknoten (ZIK) zu den Zielknoten (ZIK) nächstliegende Ziellandkartenmarkierungen (LM_ZI) ermittelt werden, wobei den Zielknoten (ZIK) lediglich Zielknotenkosten (ZIK_KOST) der unterschiedlichen Kategorien zu einer vorgegebenen zweiten Anzahl an Ziellandkartenmarkierungen (LM_ZI) zugeordnet sind, die kleiner ist als die Gesamtzahl der Landkartenmarkierungen,
- die Startknotenkosten (STK_KOST) und die Zielknotenkosten (ZIK_KOST) der unterschiedlichen Kategorien ermittelt werden abhängig von den Startknoten (STK) und den Startlandkartenmarkierungen (LM_ST) bzw. abhängig von den Zielknoten (ZIK) und von den Ziellandkartenmarkierungen (LM_ZI),
- die unterschiedlichen Kategorien von Landkartenmarkierungskosten (LM_ST) von den Startlandkartenmarkierungen (LM_ST) zu den Ziellandkartenmarkierungen (LM_ZI) ermittelt werden anhand einer Tabelle, die die Landkartenmarkierungskosten (LM_ST) der unterschiedlichen Kategorien aller Landkartenmarkierungen zueinander umfasst,
- die unterschiedlichen Kategorien aller ermittelter Kosten unterschiedlich gewichtet werden abhängig von dem Benutzerwunsch,
- die Mindestkosten (MIN_KOST) ermittelt werden abhängig von den unterschiedlich gewichteten Zielknotenkosten (ZIK_KOST), Startknotenkosten (STK_KOST) und abhängig von den ermittelten unterschiedlich gewichteten Landkartenmarkierungskosten (LM_KOST).

7. Vorrichtung zum Ermitteln von Mindestkosten (MIN_KOST) von einem Startort (STO) zu einem Zielort (ZIO) für eine Planung einer Route innerhalb einer Landkarte (MAP), wobei die Vorrichtung ausgebildet ist zum
- Ermitteln von Startknoten (STK) abhängig von dem Startort (STO), denen unterschiedliche Kategorien von Startknotenkosten (STK_KOST) von den Startknoten (STK) zu zumindest einer vorgegebenen Landkartenmarkierung zugeordnet sind und die Übergänge repräsentieren, über die von einem vorgegebenen Landkartenausschnitt (PARC) der Landkarte (MAP) zu einem anderen der vorgegebenen Landkartenausschnitte (PARC) der Landkarte (MAP) übergegangen werden kann, wobei die Landkarte (MAP) in die vorgegebenen Landkartenausschnitte (PARC) unterteilt ist,
- Ermitteln zumindest der vorgegebenen Landkartenmarkierung und der entsprechenden Startknotenkosten (STK_KOST) der unterschiedlichen Kategorien abhängig von den Startknoten (STK),
- Ermitteln von Zielknoten (ZIK) abhängig von dem Zielort (ZIO), denen die unterschiedlichen Kategorien von Zielknotenkosten (ZIK_KOST) von den Zielknoten (ZIK) zu zumindest der vorgegebenen Landkartenmarkierung zugeordnet sind und die Übergänge repräsentieren, über die von einem der vorgegebenen Landkartenausschnitte (PARC) der Landkarte (MAP) zu einem anderen der vorgegebenen Landkartenausschnitte (PARC) der Landkarte (MAP) übergegangen werden kann,
- Ermitteln der entsprechenden Zielknotenkosten (ZIK_KOST) der unterschiedlichen Kategorien abhängig von den Zielknoten (ZIK) und zumindest der vorgegebenen Landkartenmarkierung,
- unterschiedlichen Gewichten der unterschiedlichen Kategorien der Knotenkosten abhängig von einem Benutzerwunsch,
- Ermitteln der Mindestkosten (MIN_KOST) abhängig von den unterschiedlich gewichteten Knotenkosten.

## Claims

1. Method for ascertaining minimum costs (MIN_KOST) from a starting location (STO) to a destination (ZIO) for the purpose of planning a route within a map (MAP), in which
- the starting location (STO) is taken as a basis for ascertaining starting nodes (STK) which have different associated categories of starting node costs (STK_KOST) from the starting nodes (STK) to at least one prescribed map marker and which represent gateways via which it is possible to move from one prescribed map detail (PARC) from the map (MAP) to another of the prescribed map details (PARC) from the map (MAP), the map (MAP) being divided into the prescribed map details (PARC),
- the starting nodes (STK) are taken as a basis for ascertaining at least the one prescribed map marker and the corresponding starting node costs (STK_KOST) in the different categories,
- the destination (ZIO) is taken as a basis for ascertaining destination nodes (ZIK) which have the different categories of destination node costs (ZIK_KOST) from the destination nodes (ZIK) to at least the prescribed map marker associated with them and which represent gateways via which it is possible to move from one of the prescribed map details (PARC) from the map (MSP) to another of the prescribed map details (PARC) from the map (MAP),
- the destination node (ZIK) and at least the prescribed map marker are taken as a basis for ascertaining the corresponding destination node costs (ZIK_KOST) in the different categories,
- the different categories of the node costs are weighted differently on the basis of a user requirement,
- the minimum costs (MIN KOST) are ascertained on the basis of the differently weighted node costs.

2. Method as claimed in Claim 1, in which the categories comprise spatial costs, which represent physical distances, and/or in which the categories comprise temporal costs, which represent average journey times (DUR) required on average in order to cover the corresponding physical distances.

3. Method as claimed in one of the preceding claims, in which a map detail (PARC) from the map (MAP) which comprises a distinguished starting location and/or destination has at least one piece of supplementary information prescribed in it in comparison with one of the map details (PARC) which does not comprise a distinguished starting location and/or destination, the map (MAP) being divided into the prescribed map details (PARC).

4. Method as claimed in Claim 3, in which at least one additional map marker is prescribed as the piece of supplementary information.

5. Method as claimed in one of Claims 3 and 4, in which, as the piece of supplementary information, one of the map markers is prescribed such that it corresponds to the distinguished starting location and/or destination.

6. Method as claimed in one of the preceding claims, in which
- the starting nodes (STK) are taken as a basis for ascertaining starting map markers (LM_ST) which are closest to the starting nodes (STK), wherein the starting nodes (STK) have only starting node costs (STK_KOST) in the different categories to a prescribed first number of starting map markers (LM_ST), which is smaller than the total number of map markers, associated with them,
- the destination nodes (ZIK) are taken as a basis for ascertaining destination map markers (LM ZI) which are closest to the destination nodes (ZIK), wherein the destination nodes (ZIK) have only destination node costs (ZIK_KOST) in the different categories to a prescribed second number of destination map markers (LM ZI), which is smaller than the total number of map markers, associated with them,
- the starting node costs (STK_KOST) and the destination node costs (ZIK_KOST) in the different categories are ascertained on the basis of the starting nodes (STK) and the starting map markers (LM_ST) and on the basis of the destination nodes (ZIK) and the destination map markers (LM_ZI),
- the different categories of map marker costs (LM_ST) from the starting map markers (LM_ST) to the destination map markers (LM_ZI) are ascertained using a table which comprises the map marker costs (LM_ST) in the different categories of all the map markers relative to one another,
- the different categories of all the ascertained costs are weighted differently on the basis of the user requirement,
- the minimum costs (MIN_KOST) are ascertained on the basis of the differently weighted destination node costs (ZIK_KOST), starting node costs (STK_KOST) and on the basis of the ascertained differently weighted map marker costs (LM_KOST).

7. Apparatus for ascertaining minimum costs (MIN_KOST) from a starting location (STO) to a destination (ZIO) for the purpose of planning a route within a map (MAP), wherein the apparatus is designed to
- ascertain starting nodes (STK), on the basis of the starting location (STO), which have different associated categories of starting node costs (STK_KOST) from the starting nodes (STK) to at least one prescribed map marker and which represent gateways via which it is possible to move from one prescribed map detail (PARC) from the map (MAP) to another of the prescribed map details (PARC) from the map (MAP), the map (MAP) being divided into the prescribed map details (PARC),
- ascertain at least the prescribed map marker and the corresponding starting node costs (STK_KOST) in the different categories on the basis of the starting nodes (STK),
- ascertain destination nodes (ZIK), on the basis of the destination (ZIO), which have the different categories of destination node costs (ZIK_KOST) from the destination nodes (ZIK) to at least the prescribed map marker associated with them and which represent gateways via which it is possible to move from one of the prescribed map details (PARC) from the map (MAP) to another of the prescribed map details (PARC) from the map (MAP),
- ascertain the corresponding destination node costs (ZIK KOST) in the different categories on the basis of the destination nodes (ZIK) and at least the prescribed map marker,
- weight the different categories of the node costs differently on the basis of a user requirement,
- ascertain the minimum costs (MIN_KOST) on the basis of the differently weighted node costs.

## Revendications

1. Procédé permettant de déterminer, dans le cadre de la planification d'un itinéraire à l'intérieur d'une carte géographique (MAP), les coûts minimum (MIN_KOST) pour un parcours entre un lieu de départ (STO) et un lieu de destination (ZIO), au cours duquel
- en fonction du lieu de départ (STO), on détermine des noeuds de départ (STK), auxquels sont affectées différentes catégories de coûts des noeuds de départ (STK_KOST) pour un parcours entre les noeuds de départ (STK) et au moins un point de repère donné sur la carte géographique et lesquels noeuds de départ représentent les points de transfert par l'intermédiaire desquels il est possible de passer d'un secteur donné (PARC) de la carte géographique (MAP) dans un autre secteur (PARC) parmi les secteurs donnés de la carte géographique (MAP), la carte géographique (MAP) étant divisée en ces secteurs donnés (PARC) de carte géographique,
- en fonction des noeuds de départ (STK), on détermine au moins le point de repère donné sur la carte géographique et les coûts correspondants (STK_KOST) des noeuds de départ des diverses catégories,
- en fonction du lieu de destination (ZIO), on détermine des noeuds de destination (ZIK), auxquels sont affectées les différentes catégories de coûts de noeuds de destination (ZIK_KOST) pour un parcours entre les noeuds de destination (ZIK) et au moins le point de repère donné sur la carte géographique et lesquels noeuds de destination représentent les points de transfert par l'intermédiaire desquels il est possible de passer de l'un des secteurs donnés (PARC) de la carte géographique (MAP) dans un autre secteur parmi les secteurs donnés (PARC) de la carte géographique (MAP),
- en fonction du noeud de destination (ZIK) et au moins du point de repère donné sur la carte géographique, on détermine les coûts correspondants (ZIK_KOST) des diverses catégories inhérents au noeud de destination,
- les diverses catégories de coûts des noeuds sont pondérées d'une façon différente en fonction des desiderata de l'utilisateur,
- les coûts minimum (MIN_KOST) sont déterminés en fonction des coûts des noeuds pondérés différemment.

2. Procédé selon la revendication 1, dans lequel les catégories comprennent des coûts dans l'espace, qui représentent des distances dans l'espace, et/ou dans lequel les catégories comprennent des coûts dans le temps, qui représentent des durées moyennes de parcours (DUR) nécessaires en moyenne pour parcourir les distances correspondantes dans l'espace.

3. Procédé selon l'une des revendications précédentes, dans lequel, pour un secteur (PARC) de la carte géographique (MAP), qui comprend un point de départ repéré et / ou un point de destination repéré, on prescrit au moins une information supplémentaire par rapport à l'un des secteurs (PARC) de la carte géographique, qui ne comprend pas de point de départ repéré et/ou de point de destination repéré, la carte géographique (MAP) étant divisée en secteurs donnés (PARC) de carte géographique.

4. Procédé selon la revendication 3, dans lequel, en tant qu'information supplémentaire, on prescrit au moins un point de repère supplémentaire sur la carte géographique.

5. Procédé selon l'une des revendications 3 ou 4, dans lequel, en tant qu'information supplémentaire, on prescrit l'un des points de repère sur la carte géographique de manière telle qu'il corresponde au point de départ repéré et/ou au point de destination repéré.

6. Procédé selon l'une des revendications précédentes, dans lequel
- en fonction des noeuds de départ (STK), on détermine des points de repère de départ (LM_ST) les plus proches des noeuds de départ (STK), des coûts de noeuds de départ (STK_KOST) des différentes catégories étant seulement affectés aux noeuds de départ (STK) pour un premier nombre donné de points de repère de départ (LM_ST), qui est inférieur au nombre total de points de repères sur la carte géographique,
- en fonction des noeuds de destination (ZIK), on détermine des points de repère de destination (LM_ZI) les plus proches des noeuds de destination (ZIK), des coûts de noeuds de destination (ZIK_KOST) des différentes catégories étant seulement affectés aux noeuds de destination (ZIK) pour un deuxième nombre donné de points de repère de destination (LM_ZI), qui est inférieur au nombre total de points de repères sur la carte géographique,
- les coûts de noeuds de départ (STK_KOST) et les coûts de noeuds de destination (ZIK_KOST) des différentes catégories sont déterminés en fonction des noeuds de départ (STK) et des points de repère de départ (LM_ST) et, respectivement, en fonction des noeuds de destination (ZIK) et des points de repère de destination (LM-ZI),
- les différentes catégories de coûts de points de repère (LM_ST) pour un parcours entre les points de repère de départ (LM_ST) et les points de repère de destination (LM_ZI) sont déterminées à l'aide d'un tableau qui renferme les coûts de points de repère (LM_ST) des différentes catégories de tous les points de repère sur la carte géographique les uns par rapport aux autres,
- les différentes catégories de tous les frais déterminés sont pondérées différemment en fonction des desiderata de l'utilisateur,
- les coûts minimum (MIN_KOST) sont déterminés en fonction des coûts des noeuds de destination (ZIK_KOST) pondérés différemment, des coûts des noeuds de départ (STK_KOST) pondérés différemment et en fonction des coûts des points de repère (LM_KOST) pondérés différemment, qui ont été déterminés.

7. Dispositif destiné à déterminer, dans le cadre de la planification d'un itinéraire à l'intérieur d'une carte géographique (MAP), les coûts minimum (MIN_KOST) pour un parcours entre un lieu de départ (STO) et un lieu de destination (ZIO), où le dispositif est conçu pour
- déterminer, en fonction du lieu de départ (STO), des noeuds de départ (STK), auxquels sont affectées différentes catégories de coûts de noeuds de départ (STK_KOST) pour un parcours entre les noeuds de départ (STK) et au moins un point de repère donné sur la carte géographique et lesquels noeuds de départ représentent les points de transfert par l'intermédiaire desquels il est possible de passer d'un secteur donné (PARC) de la carte géographique (MAP) dans un autre secteur parmi les secteurs donnés (PARC) de la carte géographique (MAP), la carte géographique (MAP) étant divisée en ces secteurs donnés (PARC) de carte géographique,
- déterminer, en fonction des noeuds de départ (STK), au moins le point de repère donné sur la carte géographique et les coûts correspondants des diverses catégories des noeuds de départ (STK_KOST),
- déterminer, en fonction du lieu de destination (ZIO), des noeuds de destination (ZIK), auxquels sont affectées les différentes catégories de coûts de noeuds de destination (ZIK_KOST) pour un parcours entre les noeuds de destination (ZIK) et au moins le point de repère donné sur la carte géographique et lesquels noeuds de destination représentent les points de transfert par l'intermédiaire desquels il est possible de passer de l'un des secteurs donnés (PARC) de la carte géographique (MAP) dans un autre secteur parmi les secteurs donnés (PARC) de la carte géographique (MAP),
- déterminer, en fonction des noeuds de destination (ZIK) et au moins du point de repère donné sur la carte géographique, les coûts correspondants (ZIK_KOST) des diverses catégories inhérents aux noeuds de destination,
- pondérer d'une façon différente les diverses catégories de coûts des noeuds en fonction des desiderata de l'utilisateur,
- déterminer les coûts minimum (MIN_KOST) en fonction des coûts des noeuds pondérés différemment.
